# EUROPÄISCHE PATENTSCHRIFT

(11) **EP 3 636 489 B1**
(45) Veröffentlichungstag und Bekanntmachung des Hinweises auf die Patenterteilung: **31.07.2024**
(21) Anmeldenummer: 19201088.2
(22) Anmeldetag: 02.10.2019
(51) Int. Cl.: B60P 3/075, B60P 7/08

(54) **GURTHAKEN FÜR EIN BODENBLECH MIT DURCHBRECHUNGEN UND BEFESTIGUNGSANORDNUNG UND SPANNGURT MIT DEN GURTHAKEN**
BELT HOOKS FOR A FLOOR SHEET WITH PERFORATIONS AND FASTENING ARRANGEMENT AND TENSIONING BELT WITH THE BELT HOOKS
CROCHET DE SANGLE POUR UNE TÔLE DE FOND À OUVERTURES ET DISPOSITIF DE FIXATION ET SANGLE DE SERRAGE DOTÉE DE CROCHETS DE SANGLE

(30) Priorität: 04.10.2018 DE 202018105684 U
(43) Veröffentlichungstag der Anmeldung: 15.04.2020
(73) Patentinhaber: Moetefindt Fahrzeugbau GmbH & Co. KG, 21244 Buchholz (DE)
(72) Erfinder: Medrow, Malte, 21244 Buchholz (DE)
(74) Vertreter: Müller Schupfner & Partner Patent- und Rechtsanwaltspartnerschaft mbB (Hamburg)

(56) Entgegenhaltungen:
- EP-A1- 3 238 990
- EP-A1- 3 269 592
- EP-A1- 3 323 675
- DE-A1- 102012 014 602
- DE-U1- 202017 106 623
- JP-A- 2002 164 983
- JP-A- 2010 228 582
- US-A- 4 606 687
- US-B1- 9 924 784
- US-B2- 8 459 912

## Beschreibung

Die vorliegende Erfindung betrifft eine Befestigungsanordnung umfassend ein Bodenblech mit Durchbrechungen und einen Gurthaken mit vergrößertem Kopf zum Einhaken in das Bodenblech mit Durchbrechungen, insbesondere in Bodenbleche mit einer Vielzahl von Durchbrechungen. Der Gurthaken bildet zusammen mit dem Bodenblech eine Befestigungsanordnung und ist insbesondere Teil eines Spanngurtes, der z.B. zum Verzurren um einen Autoreifen gelegt wird oder um die Sprossen von Autofelgen gefädelt wird.

### Stand der Technik

Bodenbleche mit Durchbrechungen sind als Aufstandsfläche zum Transport von Ladung auf der Ladefläche eines Lastkraftwagens, eines Zuges oder eines Anhängers, der wiederum von einem Kraftfahrzeug gezogen wird, bekannt. Eine bevorzugte Anwendung betrifft Lastkraftwagen, Züge, Schiffe, Flugzeuge oder Anhänger zum Auto- oder Motorradtransport mit entsprechenden Aufstandsflächen. Die Bodenbleche sind häufig Bestandteil eines Bodenprofils. Entsprechende Bodenprofile können zu Bodenplanken oder Bodenflächen zusammengefügt werden.

Es ist bekannt, Bodenprofile mit einer regelmäßigen Folge von Durchbrechungen auf die Tragkonstruktion eines Fahrzeugs oder Containers zur Ausbildung einer Ladefläche zu montieren. Derartige Bodenprofile sind z.B. in der DE 69305846 T2 offenbart. Hier wird ein Bodenprofil aus gefalztem Blech mit einer Abfolge von Plateaus und Rinnen hergestellt. Die Rinne hat die Form eines nach oben offenem gleichschenkligen Trapezes, wobei die Seitenwände des Trapezes auch konvex oder konkav gekrümmte Querschnitte aufweisen können. Die obere Stirnfläche der Plateaus ist mittels Durchbrechungen perforiert. Die Durchbrechungen sind oval, haben parallele Seitenkanten, die als Anlagekanten fungieren, weisen eine nach oben gerichtete Stanzkante auf und liegen in einer Ebene.

Ein weiteres Bodenprofil ist aus der DE 202017106623 U1 bekannt. Das Bodenblech weist eine Vielzahl von Wellen und eine Vielzahl von Durchbrechungen auf, wobei die Wellen jeweils einen Wellenkamm als Teil der Welle mit beidseits des Wellenkamms abfallenden Wellenwänden aufweisen und die Durchbrechungen abschnittsweise im Bereich des Wellenkamms vorgesehen sind.

Die Durchbrechungen nehmen den Wellenkamm und zumindest eine der abfallenden Wellenwände beidseits des Wellenkamms zumindest teilweise aus, vorzugsweise beide Wellenwände zu mehr als der Hälfte der Höhe der abfallenden Wellenwände. Kennzeichnend ist, dass die Durchbrechungen sich jeweils nicht nur in einer Ebene befinden, sondern sich über unterschiedliche Höhen der Welle erstrecken.

In die Durchbrechungen werden Gurthaken eingelegt, an denen Gurte festgemacht sind, die zum Sichern der Ladung gegen Verrutschen durch Verzurren der Ladung dienen.

Gurthaken zum Einhaken in Durchbrechungen in Bodenbleche sind als Flachhaken, Klauenhaken (offen oder geschlossen), Zurrschienenanker oder Spitzhaken (mit ein oder zwei Fingern) bekannt. Verbreitet sind Klauenhaken, die von einem einteiligen Stahldraht gebildet werden. Der Stahldraht bildet durch Biegen im Bereich der Mitte seiner Länge eine Öse für die Gurtanbindung und an seinen Enden einen oder zwei Haken, der/die in die Durchbrechung eingehakt wird/werden. Weisen diese nur einen Haken auf, sind die Enden zusammengeführt zu einem Haken (geschlossener Klauenhaken). Aus der EP 3238990 A1 ist ein geschmiedeter Zurrhaken mit Kugelgelenk bekannt.

Es sind aber auch Gurthaken hergestellt aus einem Flacheisen bekannt, das an seinem vorderen Ende zu einem Haken umgekröpft ist und an seinem hinteren anderen Ende eine Ausnehmung in Form einer Öse zum Durchführen eines Gurtes aufweist. Vorderes und hinteres Ende können mittels eines Gelenkes verbunden sein. Das Flacheisen kann sich im Bereich der Öse zum Durchführen eines Gurtes aufweiten. Solche Gurthaken werden Flachhaken genannt. Ein Beispiel für einen derartigen Gurthaken ist aus der EP 3269592 A1 bekannt. EP 3 238 990 A1 offenbart einen Gurthaken ähnlich dem Oberbegriff von Anspruch 1.

### Aufgabe der Erfindung

Aufgabe der vorliegenden Erfindung ist es, verbesserte Gurthaken zur Verfügung zu stellen, insbesondere solche, die auch bei hohen Spannkräften sicher in den Durchbrechungen verankert bleiben ohne dass die Bodenbleche im Bereich der Durchbrechungen ausreißen oder sich verformen, insbesondere ohne dass sie sich so verformen, dass sich der Haken des Gurthakens aus der Durchbrechung löst.

### Zusammenfassung der Erfindung

Diese und weitere Aufgaben werden durch die vorliegende Erfindung in vorteilhafter Weise gelöst. Die Erfindung ist durch die unabhängigen Ansprüche gekennzeichnet. Vorteilhafte Ausgestaltungen sind Gegenstand der Unteransprüche oder nachfolgend beschrieben.

Der Gurthaken mit vergrößertem Kopf weist ein erstes Ende mit einem Haken, ein Verbindungsstück und ein zweites Ende mit einer Öse auf, wobei der Haken zwei Schenkel aufweist und sich die beiden Schenkel zu einem U ergänzen, wobei der erste Schenkel des U frei endet und zum freien Ende hin beidseits gegenüber dem zweiten Schenkel verbreitert ist und die Verbreiterung den vergrößerten Kopf bildet, wobei der zweite Schenkel an seinem Ende mit dem Verbindungsstück verbunden ist und das Verbindungsstück mit dem zweiten Ende mit der Öse verbindet. Vorzugsweise spannen der erste und der zweite Schenkel unter einem Winkel von 25 bis 49° einen Zwischenraum zwischen sich auf.

Die vorliegende Erfindung betrifft jeweils
- eine Befestigungsanordnung umfassend ein Bodenblech mit Durchbrechungen, vorzugsweise ovalen Durchbrechungen, und dem erfindungsgemäßen Gurthaken mit vergrößertem Kopf (Hammerkopf), und
- einen Spanngurt mit zumindest einem erfindungsgemäßen Gurthaken.

Der Gurthaken unterteilt sich in mehrere Segmente: einem zweiten oder hinteren Ende mit einer Öse zum Einfädeln eines Gurtes und einem ersten oder vorderen Ende mit dem Haken. Der Haken weist zwei Schenkel auf, die sich zu einem U ergänzen. Der eine Schenkel (der zweite Schenkel) ist mit einem Verbindungsstück verbunden, das sich in Richtung auf das zweite Ende mit der Öse fortsetzt. Der andere Schenkel (der erste Schenkel) des U endet frei. Die beiden Schenkel spannen einen Zwischenraum auf, insbesondere unter einem Winkel von 25 bis 49°, vorzugsweise 32 bis 42° und besonders bevorzugt 35 bis 39°. Der erste Schenkel ist vorne, zum freien Ende hin beidseits verbreitert und bildet einen Hammerkopf aus. Der zweite Schenkel ist relativ zum ersten Schenkel nicht verbreitert. Das U kann auch eine Parabelform haben. Der Fuß des U muss nicht rund geformt sein, sondern kann auch ellipsoid oder in Form mehrerer Knickstellen stufenförmig umgebogen sein.

Im Fußbereich des U, dort wo der erste Schenkel in den zweiten Schenkel übergeht (z.B. am Scheitelpunkt), weist der zweite Schenkel eine Breite b auf, während der erste Schenkel an seiner breitesten Stelle a mindestens 20% breiter, vorzugsweise mindestens 25% breiter und insbesondere mindestens 33% breiter und ganz bevorzugt mindestens 40% breiter ist. Der Haken ist somit bevorzugt nur jenseits des Scheitelpunktes des U im Bereich des ersten Schenkels verbreitert.

Der Gurthaken der Erfindung ist aus einem Stück Flachstahl einheitlicher Stärke aber unterschiedlicher Breite gefertigt. Durch die Öse ist ein Gurt geführt. Das zweite Ende ist gegenüber dem Ende des zweiten Schenkels verbreitert, um die Öse aufzunehmen, die breiter ist als der zweite Schenkel.

Weiterhin Gegenstand der Anmeldung ist ein Spanngurt mit dem Gurthaken und eine Befestigungsanordnung mit einem Bodenblech mit ovalen Durchbrechungen mit parallelen Kanten, und dem Gurthaken.

### Detaillierte Beschreibung der Erfindung

Insbesondere weist der erste Schenkel die vergrößerte Breite a über mehr als 25% der Pfadlänge auf, insbesondere für 30 bis 90% der Pfadlänge und insbesondere für 40 bis 80% der Pfadlänge des ersten Schenkels. Die Pfadlänge ist die Länge vom freien Ende des ersten Schenkels zum Übergangspunkt des ersten Schenkels in den zweiten Schenkel (dem Scheitelpunkt). Die beiden Schenkel sind insbesondere etwa gleich lang.

Der verbreiterte Kopf legt sich besonders gut an den Kantenbereich der Durchbrechung an. Weisen die Durchbrechungen eine ovale Form auf, kann der Kopf an der längsten Stelle des Ovals eintauchen und legt sich dann unter Zug unverlierbar an die Kantenbereiche des Ovals an und zwar mit einer vergrößerten Fläche, so dass der Umriss der Durchbrechung weniger leicht ausreist oder sich verformt. Der Gurthaken kann jetzt mit einer vergrößerten Kraft belastet werden, relativ zu Gurthaken, die den Hammerkopf nicht aufweisen. Insbesondere die Anlegeflächen, dort wo die parallelen Kantenbereiche in den runden Endbereich des Ovals übergehen liefern zusätzliche Stabilität.

Das Verbindungsstück verbindet Haken und das hintere Ende mit der Öse. Der zweite Schenkel und das Verbindungsstück sind bevorzugt in gerader Linie miteinander verbunden. Die Öse kann in Form eines Schlitzes ausgebildet sein, durch den der Gurt geführt ist. Der Schlitz bzw. der Gurt verläuft insbesondere parallel zur Anlegekante des Hakens.

Das Verbindungsstück kann aber auch ein Gelenk umfassen und es damit dem Gurt erlauben, auch aus der zur Anlegekante parallelen Lage auszuschwenken und/oder das hintere Ende in eine Position zu bringen die anderweitig von einer geraden Verbindung mit dem Verbindungsstück abweicht.

Der Gurthaken ist aus einem Stück Flachstahl einheitlicher Stärke (aber unterschiedlicher Breite) gefertigt. Der Flachstahl hat z.B. eine Stärke von 3 bis 9 mm, insbesondere von 4 bis 8 mm.

Insbesondere ist der Gurthaken teil eines Spanngurtes mit einem, zumindest zwei, in der Regel drei oder vier Gurthaken und einer Ratsche, wobei zumindest ein Gurthaken ein erfindungsgemäßer Gurthaken ist, vorzugsweise aber alle Gurthaken. Nach einer Ausführungsform bilden zwei Gurthaken die Enden des Gurtes (Endbeschläge), während der Gurt durch einen zweiten und dritten Gurthaken durchgefädelt ist, so dass der zweite und dritte Gurthaken (Mittelbeschläge) freiverschiebbar längs des Gurtes ist. Die Ratsche ist dann vorzugsweise zwischen einem der frei beweglichen Gurthaken und einem der Gurthaken am Ende des Gurtes angeordnet.

Die Gurte bestehen z.B. aus Polypropylen, Polyester, Nylon oder auch Baumwolle und einem Beschlag aus Metall oder Plastik, z.B. faserverstärkten Kunststoffen. Der Gurt kann auch als Kette, Kettennetz, Gliederband oder Seil ausgebildet sein. Der oder die Gurthaken ist/sind Teil der Beschläge und weiterhin vorzugsweise auch eine Ratsche. Der Spanngurt umfasste einen Gurt, eine Ratsche und zumindest einen Gurthaken.

Das Bodenblech weist vorzugsweise ovale Durchbrechungen auf, insbesondere solche mit zwei parallelen Kanten (z.B. eine Superellipse oder ein Lamésches Oval). Die zwei parallelen Kanten der Durchbrechung sind über eine Parabel oder einen Kreisbogen verbunden. Der Hammerkopf hintergreift den Umriss der Durchbrechung im Bereich einer der parallelen Kanten (= Anlegekante) vorzugsweise über die in etwa gerade Kantenlänge hinaus und hat so einen besonders ausreissicheren Halt.

Das Bodenblech bzw. das Bodenprofil hat insbesondere die Form wie in der DE 202017106623 U1 ( = EP 3480086 A1) desselben Anmelders beschrieben.

Das Bodenblech weist eine Vielzahl von Wellen und eine Vielzahl von Durchbrechungen auf, wobei die Wellen jeweils einen Wellenkamm als Teil der Welle mit beidseits des Wellenkamms abfallenden Wellenwänden aufweisen und die Durchbrechungen abschnittsweise im Bereich des Wellenkamms vorgesehen sind, und die Durchbrechungen weiterhin auch zumindest eine der abfallenden Wellenwände beidseits des Wellenkamms zumindest teilweise ausnehmen, vorzugsweise beide, insbesondere eine oder beide zu mehr als der Hälfte der Höhe der abfallenden Wellenwände.

Die Durchbrechungen befinden sich vorzugsweise zumindest in jedem zweiten Wellenkamm, insbesondere in jedem Wellenkamm. Kennzeichnend ist, dass die Durchbrechungen sich jeweils nicht nur in einer Ebene befinden, sondern sich über unterschiedliche Höhen der Welle erstrecken.

Die Wellen bilden im Schnitt (im rechten Winkel zum Wellenkamm) ein (erstes) Wellenprofil, wobei die Wellen durch runde Übergänge, etwa wie bei einem Wellblech, und/oder durch winkeliges Abknicken geschaffen werden, wie bei einem Trapezblech. Ebenso möglich sind Wellen in Rechteckform, Trapezform oder Dreiecksform oder Kombinationen dieser Formen. Insbesondere läuft zumindest der Wellenkamm oben rund aus.

Vorzugsweise bildet sich in einem Schnitt entlang des jeweiligen Wellenkamms ein zweites Wellenprofil aus mit Übergängen, insbesondere mit runden Übergängen, von (zweitem) Wellental zu (zweitem) Wellenkamm, wobei bei diesem Schnitt die Durchbrechung das Wellental und der stehengebliebene Wellenkamm einen zweiten Wellenkamm bilden.

Nach einer Ausführungsform sind die Durchbrechungen von Wellenkamm zu Wellenkamm in einer Linie angeordnet. Nach einer anderen Ausführungsform sind die Durchbrechungen von Wellenkamm zu Wellenkamm versetzt, z.B. alternierend, angeordnet.

Die Höhe auf der einen und auf der anderen Seite eines Wellenkammes ist gekennzeichnet, durch die Differenz (in Bezug auf die Flächennormale) von dem höchsten Punkt einer Welle auf dem Wellenkamm zum tiefsten Punkt der Wellenwand folgend der Welle vom Wellenkamm zur jeder der beiden abfallenden Wellenwände beidseits des Wellenkamms.

Hierbei ist der tiefste Punkt in der Wellenwand der (erste) Punkt, wo das Gefälle null wird (und z.B. in der Waagerechten weiterläuft) bzw. die abfallende Wellenwand wieder ansteigt. Nach diesem Punkt wird die ansteigende oder waagerechte Wellenwand Wellental genannt.

Das Bodenblech ist insbesondere Teil eines selbstragenden Bodenprofils. Die Kopffläche des Bodenprofils wird hierbei von dem Bodenblech gebildet.

Auf der der Aufstandsfläche gegenüberliegenden Seite des Bodenblechs sind Stützglieder vorgesehen, die sich von dem Bodenblech weg erstrecken, wobei die Stützglieder Bodenblech und Fußfläche verbinden und die Stützglieder vorzugsweise als Stützwände ausgebildet sind. Insbesondere ist im Bereich jeden Wellentals ein Stützglied angeordnet.

Die Durchbrechungen in dem Bodenblech haben senkrecht von oben betrachtet vorzugsweise eine runde oder ovale Form, insbesondere eine ovale Form.

Insbesondere weisen die Durchbrechungen jeweils auf beiden Seiten des Wellenkammes zur Hauptachse der Welle bzw. des Wellenkammes in etwa parallel verlaufende gerade Kanten auf, z.B. weil die Durchbrechungen oval sind und die Form einer liegenden 0 haben (vorzugsweise mit zwei parallelen Kanten). Insbesondere sind diese Kanten material verstärkt, vorzugsweise weil eine Materialverdickung in Form einer Rippe rechts und links parallel zum Wellenkamm verläuft.

Das Verhältnis des Durchmessers bzw. der Länge d der Durchbrechungen entlang bzw. parallel zu einer Linie auf dem Wellenkamm (an der längsten Stelle der Durchbrechungen) relativ zum Abstand der Durchbrechungen a entlang des Wellenkamms (d.h. auf derselben Linie) beträgt (ggf. im Mittel) etwa von 1 : 4 bis 4 :1, vorzugsweise etwa 3 : 1 bis 1 : 1.

Die Länge d ist größer als die Breite a des Hammerkopfes. Die Anlegekante hat vorzugsweise zumindest die Breite b des zweiten Schenkels, insbesondere hat die Anlegekante eine Länge von etwa 1 bis 12 mm mehr als die Breite b des zweiten Schenkels.

Bei dem Bodenblech wird im Aufstandsbereich mehr als 30%, vorzugsweise mehr als 40%, der Fläche senkrecht von oben betrachtet - d.h. nur die Flächenanteile in einer horizontalen Ebene zählen (in Bezug auf die Fläche im Aufstandsbereich, d.h. einschließlich Durchbrechung, Wellenkamm, Wellental, und Wellenwand) - durch Wellenkämme, einschließlich der Wellenwände bis zu dem Punkt, wo die Wellenwand in ein Wellental übergeht, insbesondere bis zur halben Höhe, gebildet.

Von der Gesamtfläche des Bodenblechs, die sich senkrecht von oben betrachtet in einer Ebene ergibt, beträgt das Verhältnis der Flächen, die durch die Durchbrechungen auf den Wellenkämmen ausgenommen werden, zu den Flächen, die stehen geblieben sind, vorzugsweise 1 : 10 bis 1 : 2, besonders bevorzugt 1 : 7 bis 1 : 3.

Das Bodenblech hat nach einer Ausgestaltung eine längliche rechtwinklige Form, wobei die Wellen bzw. Wellenkämme parallel zur kürzeren Kantenlänge verlaufen.

Bodenblech und Bodenprofil sind aus Metall oder Kunststoff hergestellt. Als Metalle sind insbesondere Leichtmetalle geeignet, insbesondere Aluminium oder Aluminiumlegierungen. Als Kunststoffe sind insbesondere faserverstärkte Kunststoffe zu nennen.

Bodenbleche und Bodenprofile aus Metall lassen sich vorzugsweise durch Strangpressen herstellen. Beim Strangpressen wird ein auf Umformtemperatur erwärmter Pressling (Block) mit einem Stempel durch eine Matrize gedrückt. Das Strangpressen dient zur Herstellung von länglichen Materialien, die in der gewünschten Länge abgetrennt werden. Bodenbleche und Bodenprofile aus Kunststoff lassen sich durch Extrusion herstellen.

Die Durchbrechungen werden z.B. durch spanabtragende Metallbearbeitung in die Bodenbleche bzw. Bodenprofile eingebracht.

Insbesondere sind mehrere Bodenprofile zu Bodenplanken oder Bodenflächen kuppelbar. Hierfür weisen die Bodenprofile nach einer bevorzugten Ausführungsform an Ihren Seitenkanten ineinandergreifende Kupplungsglieder auf.

Die Bodenbleche, Bodenprofile oder Bodenplanken/ Bodenflächen werden insbesondere für den Transport von Fahrzeugen mit Reifen genutzt.

Es hat sich überraschend gezeigt, dass sich die Reifen der zu transportierenden Fahrzeuge gut an den Durchbrechungen, welche sich nicht nur über eine Ebene erstrecken, festlegen lassen und verrutschsicherer als auf normalen flachen Bodenplanken mit Durchbrechungen transportierbar sind.

Die Fahrzeugachse bzw. Radachse verläuft dabei in etwa parallel zu den (ersten) Wellenkämmen. Auch schonen die Aufstandsflächen der erfindungsgemäßen Bodenbleche die Reifen, vergleichen mit Profilen, wo die Durchbrechungen nach oben gerichtete Grate oder Umstülpungen, wie sie durch Umformen entstehen, aufweisen.

Vorzugsweise sind die Wellentäler und Wellenkämme hierbei u.a. hinsichtlich des Höhenunterschiedes so ausgebildet, dass ein gewichtsbelasteter Reifen gleichzeitig zumindest auf einem Wellenkamm und auf einem benachbarten Wellental aufsteht.

Die Bodenprofile oder Bodenplanken sind selbsttragend und lassen sich auf einer Unterkonstruktion eines Anhängers oder Kraftfahrzeuges, insbesondere Lastkraftwagens, montieren bzw. mit dieser verschweißen. Die Bodenprofile oder Bodenplanken bilden dann die Ladefläche, wobei das Bodenblech mit der Vielzahl von Wellen und Durchbrechungen, die Aufstandsfläche bildet.

Die Erfindung wird durch nachfolgende Figuren erläutert, ohne auf diese beschränkt zu sein: Es zeigen:
- Fig. 1: eine perspektivische Ansicht des Gurthakens mit verbreitertem Kopf;
- Fig. 2: zeigt eine bemaßte Zeichnung des Gurthakens mit verbreitertem Kopf und zwar von unten und von der Seite;
- Fig. 3: eine perspektivische Ansicht eines Ausschnitts aus einem Bodenblech entlang eines durchbrochenen Wellenkammes;
- Fig. 4: den Ausschnitt aus einem Bodenblech nach Fig. 3 in einer Draufsicht;
- Fig. 5: einen Schnitt entlang einer Linie auf der Spitze des Wellenkammes des Bodenblechs nach Fig. 4;
- Fig. 6: einen Schnitt senkrecht zum Verlauf des Wellenkammes des Bodenblechs nach Fig. 4, dort wo keine Durchbrechung ist;
- Fig. 7: einen Schnitt senkrecht zum Verlauf des Wellenkammes des Bodenblechs nach Fig. 4, dort wo eine Durchbrechung ist;
- Fig. 8: eine perspektivische Ansicht eines Bodenprofils;
- Fig. 9: einen Schnitt durch das Bodenprofil senkrecht zum Verlauf der Wellenkämme;
- Fig.10: einen auf einer Bodenplanke mit einem Spanngurt verzurrten Reifen;
- Fig. 11: eine Detailansicht des Gurthakens, der durch eine Durchbrechung hindurchgesteckt ist und sich an die Anlegeflächen längs einer Anlegekante angelegt hat; und
- Fig. 12: zeigt die Detailansicht gemäß Figur 11 von unten.

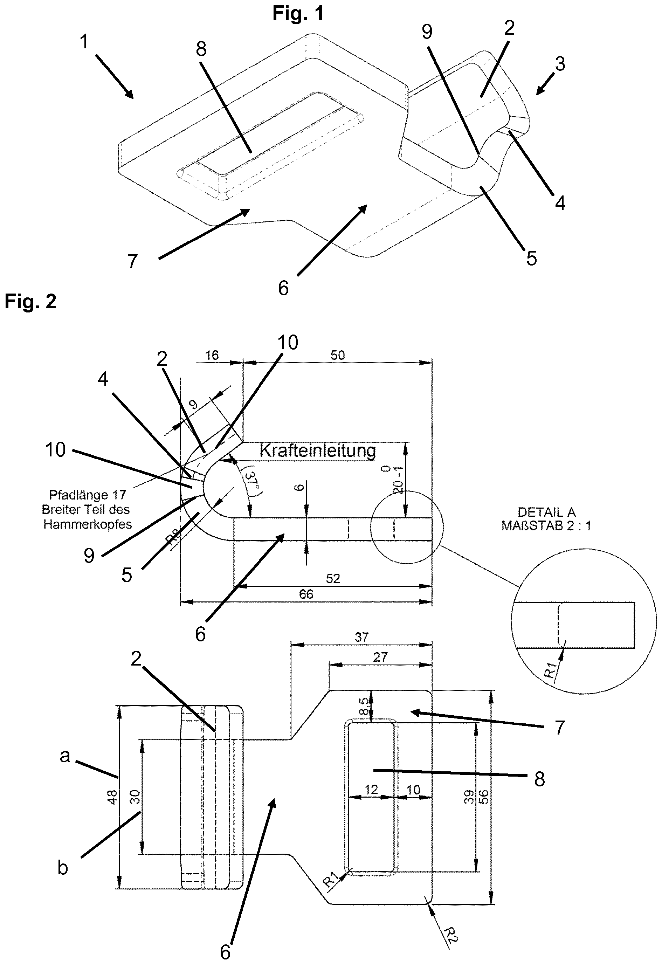

**Fig.1** zeigt den Gurthaken 1 mit vergrößertem Kopf 2 in perspektivischer Ansicht. Der Gurthaken unterteilt sich in mehrere Segmente: einem zweiten oder hinteren Ende mit einer Öse 8 zum Einfädeln eines Gurtes und einem ersten oder vorderen Ende mit dem Haken 3. Der Haken 3 wird von zwei Schenkeln 4,5 gebildet, die sich zu einem U ergänzen. Die beiden Schenkel 4,5 spannen unter einem Winkel von etwa 37° einen Zwischenraum auf. Der erste Schenkel 4 des U endet frei, ist vorne, zum freien Ende hin beidseits verbreitert und bildet einen Hammerkopf aus und zwar jenseits des Scheitelpunktes 9 des U. Das U hat einen runden Fußbereich und die Endbereiche der Schenkel 4,5 sind leicht V-förmig aufgeweitet, d.h. nicht parallel angeordnet. Die Winkelhalbierende schneidet den Scheitelpunkt des Hakens. Der zweite Schenkel 5 ist mit einem Verbindungsstück 6 verbunden, das sich in Richtung auf das hintere Ende 7 mit der Öse 8 in gerader Linie fortsetzt.

**Fig.2** zeigt die Abmessungen eines Gurthakens 1 wie er für den Automobiltransport geeignet ist. Der erste Schenkel 4 hat eine Pfadlänge von ca. 22 mm. Der Hammerkopf erstreckt sich vom freien Ende aus gerechnet ca. 17 mm entlang dem ersten Schenkel 4. Die Krafteinwirkung erfolgt auf den Gurthaken 1 im Bereich des Hammerkopfes 2, insbesondere im Bereich der ersten 9 bis 12 mm des ersten Schenkels. Der Gurthaken 1 ist aus einem Flacheisen durch Biegen geformt und hat eine im Wesentlichen einheitliche Stärke von 6 mm.

Der zweite Schenkel 5 ist mit einem Verbindungsstück 6 verbunden, das sich in Richtung auf das hintere Ende 7 mit der Öse 8 in gerader Linie fortsetzt, wobei das hintere Ende vom Verbindungsstück 6 beginnend V-förmig ausgestellt ist und sich von 30 mm am Ende des Verbindungsstücks 6 auf 56 mm an der breitesten Stelle des hinteren Endes 7 aufweitet. So ist sichergestellt, dass ein Gurt von z.B. 30 bis 40 mm Breite in die Öse 8 (Breite 39 mm) eingefädelt werden kann. Die Kanten der Öse 8 sind abgerundet.

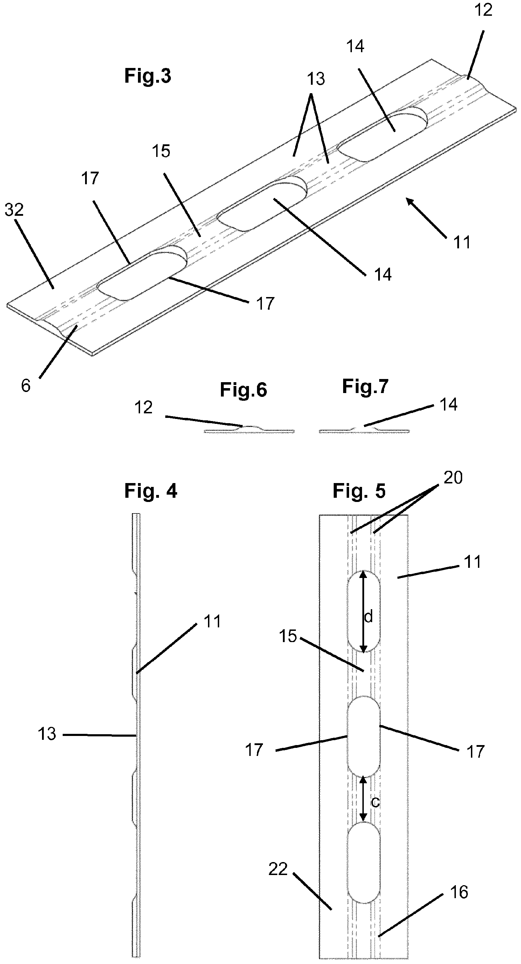

**Fig.3** gibt einen Ausschnitt aus einem Bodenblech 11 mit einem Wellenkamm 15 und jeweils beidseitig von diesem abfallenden Wellenwänden 16, die jeweils in ein Wellental 32 übergehen, wieder. Die beiden Wellentäler 32 liegen in einer Ebene. Jede Wellenwand läuft flach in einem Wellental aus. Das Wellental 32 ist weitgehend eben ausgebildet. Mehrere Wellentäler 32 formen so im Wesentlichen eine planparallele Fläche. In dem Wellenkamm 15 sind drei Durchbrechungen 14 gezeigt. Die Durchbrechungen haben jeweils die Form eines Ovals. Jede der Durchbrechungen 14 weist zwei parallele Kanten auf, die Anlegekanten 17 für den Gurthaken 1 bilden.

Die **Fig. 4 bis 7** geben weitere Ansichten des Ausschnittes des bzw. der Schnitte durch das Bodenblech 11 nach Fig. 3 wieder. Fig. 4 zeigt das Bodenblech 11 in einer Draufsicht. Fig. 5 zeigt einen Schnitt entlang dem Wellenkamm 15. Die Durchbrechungen bilden hier die zweiten Wellentäler. Fig. 6 und 7 wiederum geben Schnitte senkrecht zum Verlauf des Wellenkammes 15 wieder, einmal dort wo keine Durchbrechung ist (Fig. 6) und einmal dort, wo eine Durchbrechung 14 ist (Fig. 7).

Die Durchbrechungen 14 haben eine maximale Länge d und einen minimalen Abstand c. Als Länge d haben sich 30 bis 80 mm als zweckmäßig erwiesen, insbesondere etwa 50 mm. Die parallelen Kanten 17 (Anlagekanten) der Durchbrechung sind insbesondere 10 bis 35 mm, insbesondere etwa 22 mm, voneinander entfernt. Wie aus der Figur 2 und 3 ersichtlich ergibt sich jeweils ein auf und ab verlaufendes erstes und zweites Wellenprofil und zwar in zwei zueinander senkrechten Richtungen. Die parallelen Anlegekanten 17 haben insbesondere eine Länge von 20 bis 40 mm, insbesondere 30 bis 35 mm.

Auf der Welle 12 sind parallel zum Wellenkamm 15 jeweils zusätzlich Rippen 20 als Materialerhöhung vorgesehen, um die Aufstandsflächen 13 zusätzlich mit einem strukturierten Profil zu versehen.

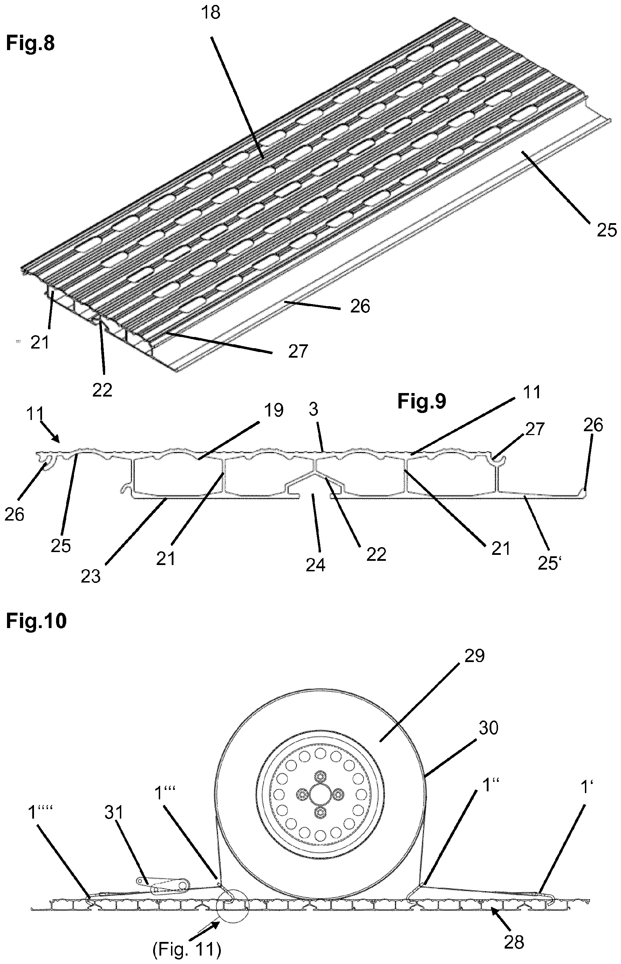

Wie aus **Fig. 8** und **9** ersichtlich besteht das Bodenprofil 18 oben aus dem Bodenblech 11 und unten aus der Fußfläche 23. Zwischen dem Bodenblech 11 und der Fußfläche 23 verlaufen Stützwände 21, die auch als Stützbrücke 22 ausgebildet sein können. Diese sind jeweils im Bereich der Wellentäler 32 angeordnet. In die Ausnehmungen 24 in der Fußfläche unter den Stützbrücken können Montagescheinen, die mit Gewindebohrungen versehen sind, eingeschoben werden. Die Montagescheinen können mit der Konstruktion z.B. eines Fahrzeug- oder Anhängerchassis verschraubt werden. An den Seiten weist das Bodenprofil Kupplungsarme 25 auf, um zwei und mehr Bodenprofile 18 zu einer Bodenplanke 28 oder Bodenfläche formschlüssig zusammenfügbar zu machen. Hierfür greifen parallel zum Wellenkamm 15 verlaufende Kupplungsstege 26 in parallel zum Wellenkamm verlaufende Kupplungsschienen 27 ein. Auf jeder Längsseite des Bodenprofiles ist jeweils ein Kupplungsarm 25. Am Ende des Kupplungsarms 25 ist der Kupplungssteg 26 und am Anfang die Kupplungsschiene 27. Einer der Kupplungsarme 25 ist Teil der Fußfläche 25' und der andere Kupplungsarm 25 Teil des Bodenblechs 11.

**Fig. 10** zeigt wie ein Reifen 29 auf einer Bodenplanke 28 aufsteht und mit einem Gurt 30 verzurrt ist. Der Gurt 30 ist oben über den Umfang des Reifens 29 geführt und hält den Reifen 29 nieder, wenn z.B. das Transportfahrzeug über eine Bodenwelle fährt. So ist der Reifen 29 des transportierten Fahrzeuges auf der Bodenplanke 28 fixiert, auch gegenüber Seitwärtsbewegungen. Der Spanngurt umfasst einen Gurt 30 und als Beschläge einen ersten Gurthaken 1' am Ende des Spanngurtes, einen zweiten Gurthaken 1", der frei verschieblich längs des Gurtes 30 ist, eine dritten Gurthaken 1‴, der ebenfalls frei verschieblich längs des Gurtes ist, und einen vierten letzten Gurthaken, der sich wiederum am Ende des Gurtes 30 befindet. Der zweite und dritte Gurthaken 1", 1‴ werden unter dem äußeren Umfang des Reifens in eine Durchbrechung 14 im Bodenblech 11 eingehakt und zwar in eine Durchbrechung, die sich in Laufrichtung des Reifens 29 in einer gedachten Laufspur des Reifens einmal rechts und einmal links von der Aufstandsfläche des Reifens 29 befinden. Mit der Ratsche 31 zwischen dem dritten und vierten Gurthaken 1 "',1 "" wird der Gurt 30 gespannt.

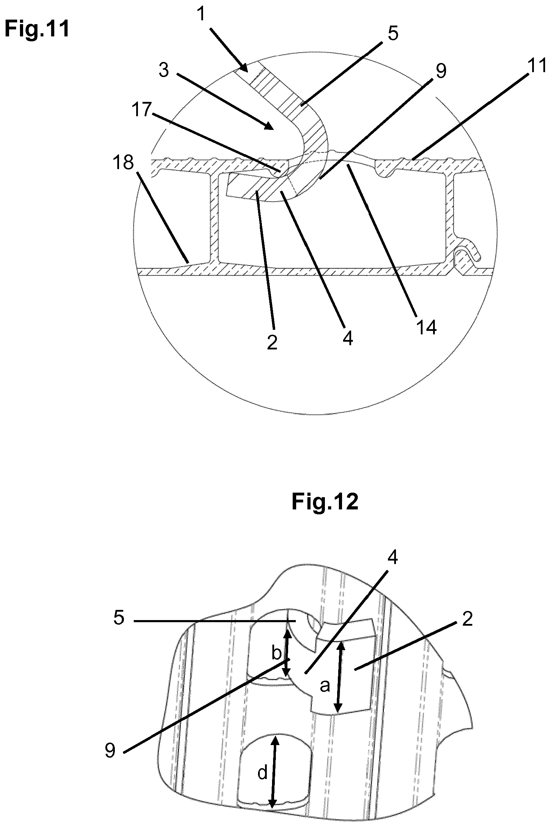

**Fig. 11** zeigt in einem seitlichen Schnitt, wie der Haken 3 des Gurtharkens 1 in eine Durchbrechung 14 eintaucht und sich im Kantenbereich (Anlegekante 17) der Durchbrechung 14 festlegt. Es handelt sich um eine Vergrößerung eines Teilausschnitts aus Fig. 10. Der Hammerkopf 2 greift durch die Durchbrechung 14 und liegt im Kantenbereich längs einer der parallelen Kanten (Anlegekante 17) der ovalen Durchbrechung 14 flächig der Auflagefläche an. Mit dünneren Linien ist angedeutet, wie sich der Wellenkamm 15 fortsetzen würde, wenn an dieser Stelle keine Durchbrechung 14 gegeben wäre.

Die Anlagekanten 17 sind mittels einer Materialverdickung in Form einer Rippe 19 parallel zum Wellenkamm 15 verstärkt. Die Rippe wird vom Harken 3 umgriffen und bildet zusammen mit dem Ende des ersten Schenkels 4 die Auflagefläche für den ersten Schenkel 4. Die Hammerkopf 2 befindet sich ausschließlich unter dem Bodenblech 11. In der Ebene der Durchbrechung 14 liegt keine Materialverbreiterung des Harkens 3 vor. Der Hammerkopf 2 liegt tiefer an. In einer nicht dargestellten Ausführungsform kann die Innenfläche des ersten Schenkels 4 die umgekehrte Kontur der Auflagefläche im Kantenbereich des Bodenblechs wiedergeben.

**Fig. 12** zeigt eine Ansicht von unten wie der Hammerkopf 2 sich im Kantenbereich der Durchbrechung 14 festlegt. Man erkennt, dass sich die Auflagefläche des ersten Schenkels 4 durch den vergrößerten Kopf 2 bis in den Bereich des runden Abschlusses des Ovals ausdehnt.

Hierfür muss der Hammerkopf 2 im Bereich der längsten Ausdehnung des Ovals, d.h. mittig und parallel zu den Anlegekanten 17, eingeschoben werden. Wenn sich der Hammerkopf 2 dann im Kantenbereich der Durchbrechung 14 u.a. an die Anlegekante 17 anlegt, ist er nach oben gesichert, weil er an dieser Stelle der Durchbrechung 14 mit dem vergrößerten Kopf 2 nicht mehr durch die Durchbrechung 14 passt.

Die Länge d der Durchbrechung ist geringfügig größer als die Breite a des Hammerkopfes. Die Anlegekante 17 ist etwas länger als die Breite b des zweiten Schenkels 5.

### Bezugszeichenliste

| | |
|---|---|
| Gurthaken | 1 |
| vergrößerter Kopf / Hammerkopf | 2 |
| Haken | 3 |
| zwei Schenkel (erster / zweiter Schenkel) | 4 / 5 |
| Verbindungsstück | 6 |
| zweites/ hinteres Ende des Gurthaken | 7 |
| Öse | 8 |
| Scheitelpunkt | 9 |
| Pfadlänge des ersten Schenkels | 10 |
| Bodenblech | 11 |
| Welle | 12 |
| Aufstandsfläche / Kopffläche des Bodenprofils | 13 |
| Durchbrechung | 14 |
| Wellenkamm | 15 |
| (abfallende) Wellenwand | 16 |
| Anlegekante(n) der Durchbrechung | 17 |
| Bodenprofil | 18 |
| Rippe zur Materialverstärkung der Kante | 19 |
| Rippen auf dem Wellenkamm | 20 |
| Stützwand | 21 |
| Stützbrücke | 22 |
| Fußfläche des Bodenprofils | 23 |
| Ausnehmung in der Fußfläche | 24 |
| Kopplungsarm | 25 |
| Kopplungssteg | 26 |
| Kopplungsschiene | 27 |
| Bodenplanke | 28 |
| Reifen | 29 |
| Gurt | 30 |
| Ratsche | 31 |
| Wellental | 32 |
| obere Wellenamplitude | 33 |
| Breite a des ersten Schenkels | a |
| Breite b des zweiten Schenkels | b |
| Abstand der Durchbrechungen | c |
| (längster) Durchmesser / Länge der Durchbrechung | d |

## Patentansprüche

1. Gurthaken (1) mit vergrößertem Kopf (2) aufweisend ein erstes Ende mit einem Haken (3), ein Verbindungsstück (6) und ein zweites Ende (7) mit einer Öse (8),
wobei der Haken (3) zwei Schenkel (4, 5) aufweist und sich die beiden Schenkel (4, 5) zu einem U ergänzen,
wobei der erste Schenkel (4) des U frei endet und zum freien Ende hin beidseits gegenüber dem zweiten Schenkel (5) verbreitert ist und die Verbreiterung den vergrößerten Kopf (2) bildet,
wobei der zweite Schenkel (5) an seinem Ende mit dem Verbindungsstück (6) verbunden ist,
wobei durch die Öse (8) ein Gurt geführt ist, und
wobei das zweite Ende (7) gegenüber dem Ende des zweiten Schenkels (5) verbreitert ist, um die Öse (8) aufzunehmen, die breiter ist als der zweite Schenkel (5), **dadurch gekennzeichnet, dass**
der Gurthaken (1) aus einem Stück Flachstahl einheitlicher Stärke aber unterschiedlicher Breite gefertigt ist und
das Verbindungsstück (6) mit dem zweiten Ende (7) mit der Öse (8) verbindet.

2. Gurthaken nach Anspruch 1, wobei der erste und der zweite Schenkel (4, 5) unter einem Winkel von 25 bis 49° einen Zwischenraum zwischen sich aufspannen.

3. Gurthaken nach Anspruch 1 oder 2, wobei der zweite Schenkel (5) dort wo er in den ersten Schenkel (4) übergeht eine Breite b aufweist, während der erste Schenkel (4) an seiner breitesten Stelle mit der Breite a mindestens 20% breiter, vorzugsweise mindestens 25% breiter und insbesondere mindestens 33% breiter und ganz bevorzugt mindestens 40% breiter ist als die Breite b.

4. Gurthaken nach mindestens einem der vorhergehenden Ansprüche, wobei der erste Schenkel (4) die Verbreiterung in Form des vergrößerten Kopfes (2) über mehr als 25% der Pfadlänge (10) des ersten Schenkels aufweist, insbesondere für mindestens 30% bis maximal 90% der Pfadlänge (10) und insbesondere für mindestens 40% bis maximal 80% der Pfadlänge (10) des ersten Schenkels.

5. Gurthaken nach mindestens einem der vorhergehenden Ansprüche, wobei das Verbindungstück (6) ein Gelenk aufweist, um das zweite Ende (7) und das Ende des zweiten Schenkels (5) gelenkig miteinander zu verbinden.

6. Gurthaken nach mindestens einem der vorhergehenden Ansprüche, wobei die Öse (8) in Form eines Schlitzes ausgebildet ist.

7. Befestigungsanordnung umfassend ein Bodenblech (11) und zumindest einen der Gurthaken (1) nach einem der vorhergehenden Ansprüche,
wobei das Bodenblech (11) eine Vielzahl von Wellen (12) und eine Vielzahl von Durchbrechungen (14) aufweist und die Wellen (12) jeweils einen Wellenkamm (15) mit beidseits des Wellenkamms (15) abfallenden Wellenwänden (16) aufweisen und die Durchbrechungen (14) im Bereich des Wellenkamms (15) vorgesehen sind, wobei die Durchbrechungen (14) vorzugsweise jeweils auch zumindest eine der abfallenden Wellenwände (16) beidseits des Wellenkamms (15) abschnittsweise zumindest teilweise ausnehmen, und
wobei zumindest einer der Gurthaken (1) in zumindest einer der Durchbrechungen (14) festgemacht ist.

8. Befestigungsanordnung nach Anspruch 7, wobei die Durchbrechungen (14) beide abfallenden Wellenwände (16) beidseits des Wellenkamms (15) abschnittsweise zumindest teilweise ausnehmen, vorzugsweise im Wesentlichen vollständig.

9. Befestigungsanordnung nach zumindest einem der Ansprüche 7 oder 8, wobei die Durchbrechungen (14) sich jeweils nicht nur in einer Ebene befinden, sondern sich über unterschiedliche Höhen der Welle (12) erstrecken.

10. Befestigungsanordnung nach zumindest einem der Ansprüche 7 bis 9, wobei die Wellen (12) im Schnitt ein Wellenprofil mit runden Übergängen zumindest im Bereich der Wellenkämme (15) bilden.

11. Befestigungsanordnung nach zumindest einem der Ansprüche 7 bis 10, wobei die Durchbrechungen (14) senkrecht von oben betrachtet eine runde, ovale, trapezförmige oder sechseckige Form haben, insbesondere eine ovale Form mit zwei zueinander parallelen Kanten, wobei eine der parallelen Kanten eine Anlegekante (17) bildet und weiter bevorzugt die Kantenlänge der Anlegekante (17) kleiner als die Breite des ersten Schenkels (Länge a) ist und größer als die Breite des zweiten Schenkels (Länge b) ist und der größte Durchmesser der Durchbrechung (14) größer als die Länge a ist.

12. Befestigungsanordnung nach zumindest einem der Ansprüche 7 bis 11, wobei die Durchbrechungen (14) zumindest jeweils auf beiden Seiten des Wellenkammes (15) zur Hauptachse der Welle bzw. des Wellenkammes (15) in etwa parallel verlaufende gerade Kanten aufweisen, und die Kanten, die die Anlegekante (17) bilden, vorzugsweise materialverstärkt sind, insbesondere weil eine Materialverdickung in Form einer Rippe (19) rechts und links parallel zum Wellenkamm (15) verläuft.

13. Befestigungsanordnung nach zumindest einem der Ansprüche 7 bis 12, wobei das Verhältnis des längsten Durchmessers bzw. der längsten Länge d der Durchbrechungen entlang des Wellenkamms (15) relativ zum Abstand c der Durchbrechungen (14) entlang des Wellenkamms (15) von 1: 4 bis 4:1, vorzugsweise 3 :1 bis 1 : 1, beträgt.

14. Befestigungsanordnung nach zumindest einem der Ansprüche 7 bis 13, wobei das Bodenblechs (11) Teil eines Bodenprofils (18) ist und hierzu auf der der Aufstandsfläche gegenüberliegenden Seite des Bodenblechs (11) Stützglieder vorgesehen sind, die sich von dem Bodenblech (11) wegerstrecken, und die Stützglieder eine Fußfläche (23) mit dem Bodenprofil (18) verbinden und die Stützglieder vorzugsweise als Stützwände (21) ausgebildet sind, die parallel zu den Wellenkämmen (15) verlaufen.

15. Befestigungsanordnung nach Anspruch 14, wobei
a) das Bodenprofil (18) selbsttragend ist und/oder
b) durch Aneinanderlegen, insbesondere Aneinanderkoppeln, mehrerer Bodenprofile (18) Bodenplanken (28) oder Bodenflächen herstellbar sind, insbesondere als Aufstandsflächen von Transportvorrichtungen für Automobile und Motorräder.

16. Spanngurt umfassend zumindest einen Gurthaken (1) nach zumindest einem der Ansprüche 1 bis 7, einen Gurt (30) und eine Ratsche (31) zum Spannen des Gurtes (30), wobei der Gurt (30) durch die Öse (8) des zumindest einen Gurthakens (1) und durch die Ratsche (31) geführt ist, wobei der Spanngurt, vorzugsweise Teil der Befestigungsanordnung nach zumindest einem der Ansprüche 7 bis 15 ist.

## Claims

1. Belt hook (1) with enlarged head (2), comprising a first end with a hook (3), a connector (6) and a second end (7) with an eyelet (8),
wherein the hook (3) comprises two legs (4, 5) and the two legs (4, 5) complement one another to form a U,
wherein the first leg (4) of the U ends freely and is widened towards the free end on both sides relative to the second leg (5) and the widening forms the enlarged head (2),
wherein the second leg (5) is connected at its end to the connector (6),
wherein a belt is passed through the eyelet (8), and
wherein the second end (7) is widened relative to the end of the second leg (5) in order to receive the eyelet (8), which is wider than the second leg (5),
**characterized in that**
the belt hook (1) is made from a piece of flat steel of uniform thickness but different width and
the connector (6) connects with the second end (7) having the eyelet (8).

2. Belt hook according to claim 1, wherein the first and second leg (4, 5) span a space between them at an angle of 25 to 49°.

3. Belt hook according to claim 1 or 2, wherein the second leg (5) has a width b where it transitions into the first leg (4), while the first leg (4) at its widest point with the width a is at least 20% wider, preferably at least 25% wider and in particular at least 33% wider and most preferably at least 40% wider than the width b.

4. Belt hook according to at least one of the preceding claims, wherein the first leg (4) has the widening in the form of the enlarged head (2) over more than 25% of the path length (10) of the first leg, in particular for at least 30% to maximally 90% of the path length (10) and in particular for at least 40% to maximally 80% of the path length (10) of the first leg.

5. Belt hook according to at least one of the preceding claims, wherein the connector (6) comprises a joint for hingedly connecting the second end (7) and the end of the second leg (5) to each other.

6. Belt hook according to at least one of the preceding claims, wherein the eyelet (8) is in the form of a slit.

7. Mounting arrangement comprising a floor panel (11) and at least one of the belt hooks (1) according to one of the preceding claims,
wherein the floor panel (11) has a plurality of corrugations (12) and a plurality of through holes (14) and the corrugations (12) each have a corrugation crest (15) with descending corrugation walls (16) on both sides of the corrugation crest (15) and the through holes (14) are provided in the region of the corrugation crest (15), wherein the through holes (14) preferably also at least partially recess at least one of the descending corrugation walls (16) on both sides of the corrugation crest (15) section wise, and
wherein at least one of the belt hooks (1) is secured in at least one of the through holes (14).

8. Mounting arrangement according to claim 7, wherein the through holes (14) at least partially recess both descending corrugation walls (16) on both sides of the corrugation crest (15) section wise, preferably substantially completely.

9. Mounting arrangement according to at least one of claims 7 or 8, wherein the through holes (14) are not only located in one plane, but extend over different heights of the corrugations (12).

10. Mounting arrangement according to at least one of claims 7 to 9, wherein the corrugations (12) in a sectional view form a corrugation profile with round transitions at least in the region of the corrugation crests (15).

11. Mounting arrangement according to at least one of claims 7 to 10, wherein the through holes (14), viewed vertically from above, have a round, oval, trapezoidal or hexagonal shape, in particular an oval shape with two edges parallel to one another, wherein one of the parallel edges forms a contact edge (17) and further preferably the edge length of the contact edge (17) is smaller than the width of the first leg (length a) and greater than the width of the second leg (length b) and the largest diameter of the through hole (14) is greater than the length a.

12. Mounting arrangement according to at least one of claims 7 to 11, wherein the through holes (14) have straight edges running approximately parallel to the main axis of the corrugation or the corrugation crest (15) each at least on both sides of the corrugation crest (15), and the edges forming the contact edge (17) are preferably material-reinforced, in particular because a material thickening in the form of a rib (19) runs parallel to the corrugation crest (15) on the right and left.

13. Mounting arrangement according to at least one of claims 7 to 12, wherein the ratio of the longest diameter or the longest length d of the through holes along the corrugation crest (15) relative to the distance c of the through holes (14) along the corrugation crest (15) is from 1:4 to 4:1, preferably 3:1 to 1:1.

14. Mounting arrangement according to at least one of claims 7 to 13, wherein the floor panel (11) is part of a floor profile (18) and for this purpose support members are provided on the side of the floor panel (11) opposite the contact surface, which extend away from the floor panel (11), and the support members connect a base surface (23) to the floor profile (18) and the support members are preferably designed as support walls (21) which extend parallel to the corrugation crests (15).

15. Mounting arrangement according to claim 14, wherein
a) the floor profile (18) is self-supporting and/or
b) is producable by connecting, in particular by coupling, multiple floor profiles (18), floor planks (28) or floor surfaces, in particular as contact surfaces of transportation devices for automobiles and motorcycles.

16. Fastening belt comprising at least one belt hook (1) according to at least one of claims 1 to 7, a belt (30) and a ratchet (31) for fastening the belt (30), wherein the belt (30) is guided through the eyelet (8) of the at least one belt hook (1) and through the ratchet (31), wherein the fastening belt is preferably part of the mounting arrangement according to at least one of claims 7 to 15.

## Revendications

1. Crochet de sangle (1) ayant une tête grossie (2) présentant une première extrémité avec un crochet (3), une pièce de liaison (6) et une deuxième extrémité (7) munie d'une boucle (8),
dans lequel le crochet (3) présente deux épaulements (4, 5) et les deux épaulements (4, 5) se complètent pour former un U,
dans lequel le premier épaulement (4) du U se termine librement et s'élargit jusqu'à l'extrémité libre des deux côtés à l'opposé du deuxième épaulement (5) et l'élargissement forme la tête grossie (2),
dans lequel le deuxième épaulement (5) est relié à son extrémité à la pièce de liaison (6),
dans lequel une sangle est guidée à travers la boucle (8), et
dans lequel la deuxième extrémité (7) est élargie à l'opposé de l'extrémité du deuxième épaulement (5) pour accueillir la boucle (8) qui est plus large que le deuxième épaulement (5), **caractérisé en ce que**
le crochet de sangle (1) est fabriqué en une pièce d'acier plat d'épaisseur uniforme mais de largeur différente et
la pièce de liaison (6) relie la deuxième extrémité (7) à la boucle (8).

2. Crochet de sangle selon la revendication 1, dans lequel le premier et le deuxième épaulement (4, 5) définissent un espace intermédiaire entre eux à un angle de 25 à 49°.

3. Crochet de sangle selon la revendication 1 ou 2, dans lequel le deuxième épaulement (5) présente une largeur b là où il se transforme en premier épaulement (4), alors que le premier épaulement (4) a une largeur a plus large d'au moins 20 % au niveau de son emplacement le plus large, de préférence plus large d'au moins 25 % et en particulier plus large d'au moins 33 % et de manière tout à fait préférée plus large d'au moins 40 % que la largeur b.

4. Crochet de sangle selon au moins l'une des revendications précédentes, dans lequel le premier épaulement (4) présente l'élargissement sous la forme de la tête grossie (2) de plus de 25 % de la longueur de parcours (10) du premier épaulement, en particulier pour au moins 30 % jusqu'à au maximum 90 % de la longueur de parcours (10), et en particulier pour au moins 40 % jusqu'à au maximum 80 % de la longueur de parcours (10) du premier épaulement.

5. Crochet de sangle selon au moins l'une des revendications précédentes, dans lequel la pièce de liaison (6) présente une articulation pour relier la deuxième extrémité (7) et l'extrémité du deuxième épaulement (5) de manière articulée l'une à l'autre.

6. Crochet de sangle selon au moins l'une des revendications précédentes, dans lequel la boucle (8) est conçue sous la forme d'une fente.

7. Dispositif de fixation comprenant une tôle de fond (11) et au moins l'un des crochets de sangle (1) selon l'une des revendications précédentes,
dans lequel la tôle de fond (11) présente une multitude d'ondulations (12) et une multitude d'ouvertures (14) et les ondulations (12) présentent respectivement une crête d'ondulation (15) ayant des parois d'ondulation (16) tombant des deux côtés de la crête d'ondulation (15) et les ouvertures (14) sont prévues dans la zone de la crête d'ondulation (15), les ouvertures (14) découpant de préférence respectivement aussi au moins l'une des parois d'ondulation tombantes (16) des deux côtés de la crête d'ondulation (15) au moins partiellement par segment, et
dans lequel au moins l'un des crochets de sangle (1) est attaché dans au moins l'une des ouvertures (14).

8. Dispositif de fixation selon la revendication 7, dans lequel les ouvertures (14) découpent les deux parois d'ondulation tombantes (16) des deux côtés de la crête d'ondulation (15) au moins partiellement par segment, de préférence sensiblement totalement.

9. Dispositif de fixation selon au moins l'une des revendications 7 ou 8, dans lequel les ouvertures (14) se trouvent respectivement non seulement dans un plan, mais s'étendent aussi sur différentes hauteurs de l'ondulation (12).

10. Dispositif de fixation selon au moins l'une des revendications 7 à 9, dans lequel les ondulations (12) forment un profil d'ondulation en coupe avec des transitions arrondies au moins dans la zone des crêtes d'ondulation (15).

11. Dispositif de fixation selon au moins l'une des revendications 7 à 10, dans lequel les ouvertures (14) ont, observées depuis le haut à la verticale, une forme ronde, ovale, trapézoïdale ou hexagonale, en particulier une forme ovale avec deux arêtes parallèles l'une à l'autre, dans lequel l'une des arêtes parallèles forme une arrête de repos (17) et de manière mieux préférée la longueur d'arête de l'arête de repos (17) est supérieure à la largeur du premier épaulement (longueur a) et inférieure à la largeur du deuxième épaulement (longueur b) et le diamètre le plus grand de l'ouverture (14) est supérieur à la longueur a.

12. Dispositif de fixation selon au moins l'une des revendications 7 à 11, dans lequel les ouvertures (14) présentent au moins respectivement sur les deux côtés de la crête d'ondulation (15) par rapport à l'axe principal de l'ondulation et/ou de la crête d'ondulation (15) des arêtes droites à peu près parallèles, et les arêtes qui forment l'arête de repos (17) présentent de préférence un renfort de matière, en particulier parce qu'un épaississement du matériau est disposé sous la forme d'une nervure (19) à droite et à gauche parallèlement à la crête d'ondulation (15).

13. Dispositif de fixation selon au moins l'une des revendications 7 à 12, dans lequel le rapport du diamètre le plus long et/ou de la longueur la plus longue d des ouvertures le long de la crête d'ondulation (15) par rapport à la distance c des ouvertures (14) le long de la crête d'ondulation (15) est de 1 : 4 à 4 : 1, de préférence de 3 : 1 à 1 : 1.

14. Dispositif de fixation selon au moins l'une des revendications 7 à 13, dans lequel la tôle de fond (11) fait partie d'un profil de fond (18) et des éléments d'appui qui s'étendent en partant de la tôle de fond (11) sont disposés à cet égard sur le côté de la tôle de fond (11) opposée à la surface de contact et les éléments d'appui relient une surface d'embase (23) avec le profil de fond (18) et les éléments d'appui sont conçus de préférence en tant que parois d'appui (21) qui sont parallèles aux crêtes d'ondulation (15).

15. Dispositif de fixation selon la revendication 14, dans lequel
a) la profil de fond (18) est autoportant et/ou
b) par assemblage, en particulier accouplement, de plusieurs profils de fond (18), des planchers (28) ou des surfaces de fond peuvent être fabriqués, notamment en tant que surfaces de contact d'équipements de transports pour automobiles et motocyclettes.

16. Sangle de serrage comprenant au moins un crochet de sangle (1) selon au moins l'une des revendications 1 à 7, une sangle (30) et un cliquet (31) pour tendre la sangle (30), la sangle (30) étant guidée à travers la boucle (8) du au moins un crochet de sangle (1) et à travers le cliquet (31), la sangle de serrage faisant de préférence partie de la disposition de fixation selon au moins l'une des revendications 7 à 15.
